# EUROPÄISCHE PATENTSCHRIFT

(11) **EP 2 921 755 B1**
(45) Veröffentlichungstag und Bekanntmachung des Hinweises auf die Patenterteilung: **28.09.2016**
(21) Anmeldenummer: 15000618.7
(22) Anmeldetag: 04.03.2015
(51) Int. Cl.: F16L 13/14

(54) **KUPPLUNG ZUR HERSTELLUNG EINER PRESSVERBINDUNG ZWISCHEN ZWEI ROHREN**
CONNECTOR FOR CREATING A PRESS CONNECTION BETWEEN TWO PIPES
COUPLAGE DESTINÉ À LA FABRICATION D'UNE LIAISON PAR SERRAGE ENTRE DEUX TUBES

(30) Priorität: 19.03.2014 DE 102014003849
(43) Veröffentlichungstag der Anmeldung: 23.09.2015
(73) Patentinhaber: Eugen Riexinger GmbH & Co. KG Plasticconnectingssystems, 75378 Bad Liebenzell (DE)
(72) Erfinder: Theobald, Marcus, 57242 Neuhausen (DE); Knecht, Karl, 79736 Rickenbach (DE)
(74) Vertreter: Ludewig, Rita

(56) Entgegenhaltungen:
- WO-A1-92/03681
- WO-A1-2006/090123
- WO-A1-2014/000331
- CH-A5- 695 026

## Beschreibung

Die Erfindung betrifft eine Kupplung zur Herstellung einer Preßverbindung zwischen zwei Rohren zur Neuinstallation oder Reparatur von Rohrleitungen in Anlagen oder Bereichen, in denen aus Sicherheitsgründen nicht geschweißt werden darf, insbesondere in Bereichen, in denen explosionsgefährdete, leicht brennbare oder empfindliche Medien für Medizin, Chemie und Nahrungsmittel in Rohrsystemen geführt werden.

Aus der CH 695 026 A5 ist eine Kupplungsvorrichtung zur Herstellung einer permanent unlösbaren Rohrverbindung bekannt, bestehend aus einem, die beiden Rohrenden umfassenden muffenförmigen, rotationssymmetrischen Grundkörper, dadurch gekennzeichnet, daß eine Muffe eine mittleren Bereich mit einem dem Rohrdurchmesser der Rohrstücke entsprechenden konischen nach innen gerichteten Anschlag und beiderseits des mittleren Bereichs anschließende Bereiche zur Aufnahme der Rohrstücke aufweist, deren Innenwand mit mindestens einem nach innen gerichteten Bund und dessen Außenwand gegenüber dem Bund mit einem nach außen gekrümmten Wulst versehen ist und daß auf den anschließenden Bereichen umgreifende, axial zu verschiebende Preßringe vorhanden sind. Die Lösung zeigt in der Praxis Instabilitäten an der Nahtstelle der Rohrenden und führt zu Verformungen bzw. Deformierungen an den Rohrwänden oder deren Verbindungsstellen. Die auftretenden Deformierungen führen besonders innerhalb der Rohrwände zu Verwirbelungen sowie zu daraus resultierenden Strömungsveränderungen bei den in den Rohren geführten gasförmigen oder flüssigen Medien. Auch kommt es beim Preßvorgang zu Verschiebungen der Preßringe. Durch die Deformierungen der Rohrinnenwände, die Entstehung von Wülsten und den Versatz der Preßringe werden innerhalb der Rohre Anhaftungen beschleunigt, was zu Verunreinigungen der Medien und Verengungen der Rohrverbindungen führt und die Preßverbindung insbesondere in der Medizin, der Chemie oder in der Lebensmittelbranche als ungeeignet erscheinen läßt.

Es war deshalb Aufgabe der Erfindung, eine Preßverbindung für die Neuinstallation und Reparatur von Rohrleitungen in Anlagen oder Bereichen, in denen aus Sicherheitsgründen nicht geschweißt werden darf, insbesondere in Bereichen, in denen explosionsgefährdete, leicht brennbare oder empfindliche Medien für Medizin, Chemie und Nahrungsmittel in Rohrsystemen geführt werden, so weiter zu entwickeln, daß ein sauberes Anlegen der zu verbindenden Rohrenden in einem Verbindungsteil möglich ist, der Preßvorgang einen Selbstzentrierungseffekt an den zu verbindenden Rohrenden bewirkt, daß sich das Preßwerkzeug beim Preßvorgang nicht öffnen und sich die Preßhülsen weder radial noch axial unkontrolliert bewegen können, beim Preßvorgang Deformierungen minimiert, keine Quetschungen oder Verletzungen der Innenwände in den Rohren erzeugt werden und somit die Wirkungen des Preßvorgangs kontrolliert erfolgen können.

Die Aufgabe wird mit den Merkmalen des Anspruchs 1 gelöst, dadurch daß am Grundkörper des Verbindungsstücks der mittlere Bereich als radial nach außen gerichteter doppelstufiger Bund ausgebildet ist, dessen erster Stufenbereich sich radial verjüngende Stirnflächen aufweist, an die sich ein zweiter Stufenbereich mit einer beidseitig radial senkrecht verlaufenden Anschlagfläche anschließt, wobei an die Anschlagflächen jeweils einer der Haltebereiche axial angeformt ist, dessen Außenfläche, in axialer Richtung nacheinander in einer abfallenden und einer ebenen Form verläuft und daß an den axial verschiebbaren Preßhülsen an der kreisförmigen Außenwand an dem zum doppelstufigen Bund gerichteten Ende eine schanzenförmig ansteigende Kontur und an der kreisförmigen Innenwand in axialer Richtung zwei nacheinander abfallend geschwungene Rampen angeformt sind und an dem vom doppelstufigen Bund abgewandten Ende in einer ringförmigen Stirnfläche eine axiale nach innen gerichtete Ausnehmung angeordnet ist.

Ein besonders hervorzuhebender Vorteil der Erfindung besteht darin, daß durch den konstruktiven Aufbau des Grundkörpers und der Preßhülsen in ihrem Zusammenwirken beim Preßvorgang zwischen der Oberfläche der Haltebereiche und der Innenwand der Preßhülsen jeweils beidseitig der Wulst gewisse Hohlräume bilden, die durch das Anliegen der Stirnfläche der Preßhülse an der senkrechten Anschlagfläche des doppelstufigen Bundes und das Aufliegen der Innenfläche der Preßhülsen auf der Außenfläche der Haltebereiche, geschlossen werden. Die Hohlräume stehen beim verpressen der Wulst zu Aufnahme des Wulstmaterials zur Verfügung. Die an der Innenwand der Haltebereiche, gegenüber der Wulst und am Ende der Haltebereiche angeformten Bunde werden dabei beim Preßvorgang nur in die Materialoberfläche der Rohrwände gedrückt. Außerdem gewährleisten die geschwungenen Rampen an der Innenwand der Preßhülsen einen lineraren Kräfteverlauf und einen gleichbleibenden axialen Kraftaufwand sowie eine harmonische gleichmäßige Kraftverteilung während des Preßvorganges. Schließlich wird durch die geschwungenen Rampen das radiale Bewegungsspiel der Teile zueinander erheblich reduziert und die Dichtheit der Verbindung gewährleistet. Der konstruktive Aufbau der erfindungsgemäßen Preßverbindung gestattet die Verteilung der Materialien der aufeinander gepreßten Teile und minimiert die Deformierung der Innenwände der Rohrenden, wodurch die Innenwände der Rohrenden nach dem Preßvorgang in axialer Richtung eine nahezu stufenlose geschlossene Rohrleitung und eine gas- und wasserdichte Preßverbindung bilden.

Hervorzuheben sind auch die schanzenförmig ansteigenden Konturen, die sich an die kleinere Stirnfläche in axialer Richtung an der Außenwand der Preßhülsen anschließen. Sie gewährleisten eine exakte Aufnahme des Preßwerkzeuges und dessen Einführung in die sich verjüngende Stirnfläche in dem nach außen gerichteten ersten Stufenbereich am doppelstufigen Bund. Außerdem läßt sich während des Preßvorgangs das Preßwerkzeug zur Achsmitte besser schließen. Auch wird ein sichtbarer sauberer stirnseitiger Anschlag der Preßhülsen an der Anschlagfläche des zweiten Stufenbereiches des stufenförmigen Bundes gewährleistet.

Vorteilhaft sind des weiteren die am Bund im ersten Stufenbereich beidseitig angeformten sich radial zu Achse verjüngenden Stirnflächen und die an den Preßhülsen endseitig an der größeren Stirnfläche eingeformten Ausnehmungen, die als Aufnahmen für ein, für die Erfindung entwickeltes, Preßwerkzeug dienen. Diese Aufnahmen bewirken einerseits, daß das Preßwerkzeug positionsgenau und lagerichtig angesetzt werden kann. Andererseits können die beim Preßvorgang entstehenden axialen Schubteilkräfte in Richtung Achsmitte geleitet werden, wodurch sich das Preßwerkzeug beim Preßvorgang nicht öffnen kann. Das wiederum hat den Vorteil, daß sich die Preßhülsen weder radial noch axial unkontrolliert bewegen können und der Verpressungsvorgang in jeder Hinsicht kontrolliert werden kann. Da bei der erfindungsgemäßen Kupplung kein Versatz der Rohrenden an der Nahtstelle und somit keine nennenswerten Anhaftungen entstehen können, ist diese mit Einschränkung insbesondere auch in Industriebereichen der Medizin, der Chemie und der Lebensmittelbranche einsetzbar. Die Konstruktion und deren geringe Baumaße im Bezug auf die Druckbelastbarkeit sind ebenfalls hervorzuheben. Anwendungen im Hochdruckbereich mit beispielsweise 400 bar sind nachgewiesen erfolgreich.

Von besonderer Bedeutung ist außerdem die Anwendbarkeit der erfindungsgemäßen Kupplung in vorhandenen Rohrsystemen zu Reparaturzwecken. Dabei werden die Preßhülsen aufgetrennt und der Grundkörper der Kupplung, der die Rohrenden miteinander verbindet ist leicht demontierbar und ohne Beschädigungen an den Rohrenden austauschbar. Der Reparaturvorgang ist einfach, läßt sich schnell ausführen und trägt somit zur Kostenminimierung bei.

Schließlich kann hervorgehoben werden, daß die Kupplung für alle Rohrmaterialien benutzt werden kann und daß sie hinsichtlich ihrer Baugrößen den jeweiligen Erfordernissen anzupassen ist.

Die Erfindung soll nachfolgend an einem Ausführungsbeispiel näher beschrieben werden. Dabei zeigen
Fig. 1 einen Schnitt A-A durch eine Rohrverbindung mit der erfindungsgemäßen Kupplung.
Fig. 2 die Seitenansicht der Kupplung als geschlossene Preßverbindung für zwei Rohre.

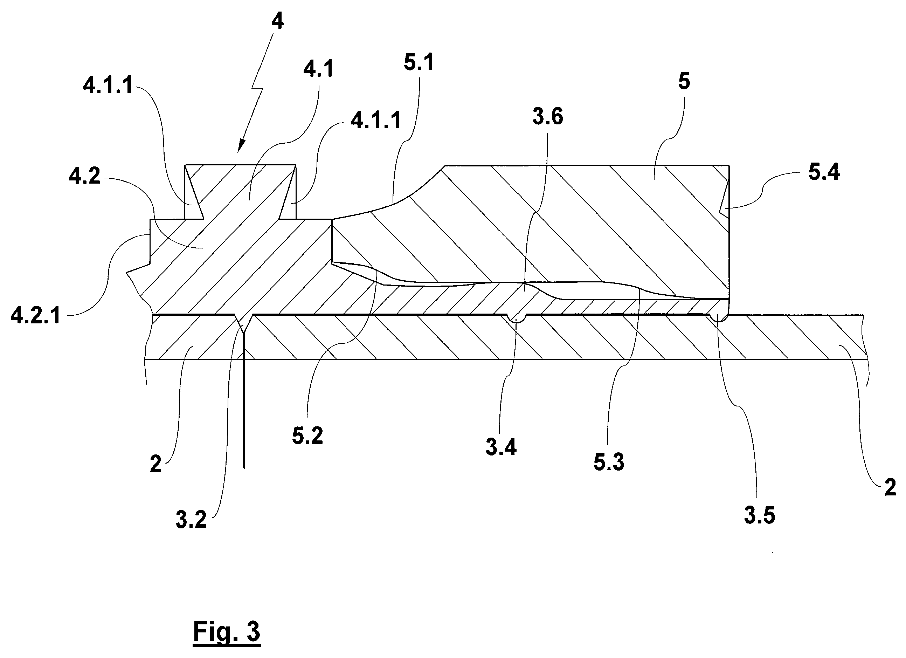

Fig. 3 einen Ausschnitt des rechten verpreßten Teils von Fig.1.

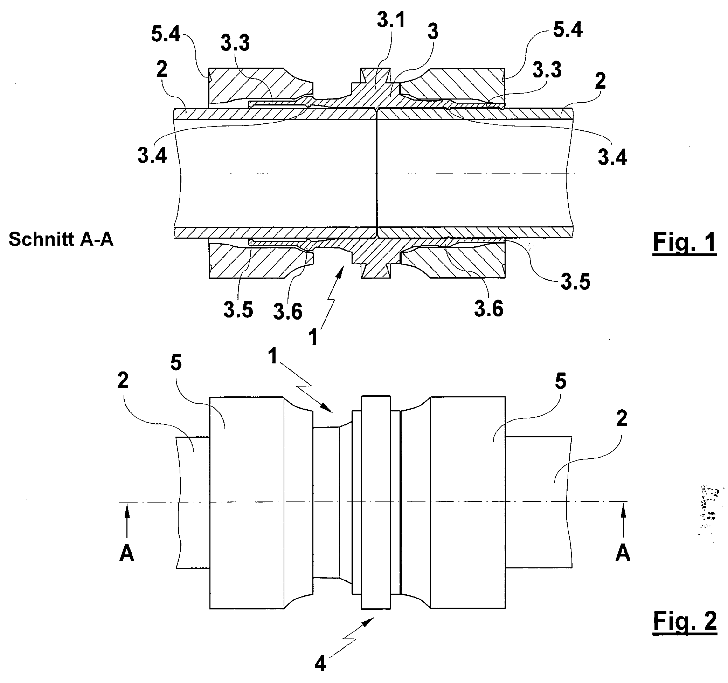

In einem Ausführungsbeispiel wird, gemäß Fig. 1 und 2, auf je ein Rohrende 2 jeweils eine Preßhülse 5 mit ihrer kleineren Stirnfläche zum Rohrende 2 ragend aufgeschoben. Die mit einer Preßhülse 5 bestückten Rohrenden 2 können nun jeweils gegenüberliegend in einen Grundkörper 3 des Verbindungsstücks 1 eingeführt werden, bis sie mit ihren Stirnflächen und mit ihren Fasen mit dem Anschlag 3.2 der Innenwand des mittleren Bereiches 3.1 aneinander stoßen. Danach werden die Preßringe 5 von den Rohrenden 2 auf die Außenwand der Haltebereiche 3.3 aufgeschoben bis die erste geschwungene Rampe 5.2 auf der Wulst 3.6 des jeweiligen Haltebereichs 3.3 aufliegt. Nun wird ein für die erfinderische Kupplung hergestelltes Preßwerkzeug auf den ersten Stufenbereich 4.1 des doppelstufigen Bundes 4 der vormontierten Kupplung aufgesetzt, dabei rasten die gegeneinander gerichteten Krallen des Preßwerkzeuges in die sich in radialer Richtung zur Achse verjüngenden Stirnflächen 4.1.1 und in die Ausnehmungen 5.4 in den äußeren Stirnflächen der Preßhülsen 5 ein. Das Preßwerkzeug ist jetzt so mit den zu verpressenden Teilen der Kupplung verbunden, daß die Preßhülsen 5 beidseitig gegen den mittleren Bereich 3.1 des Grundkörpers 3 gedrückt werden. Dabei werden die axialen Schubteilkräfte in Richtung Achsmitte geleitet, wodurch die Wulst 3.6 in die Hohlräume zwischen der Innenwand der Preßhülsen 5 und der Außenwand der Haltebereiche 3.3 und der an der Innenwand der Halteteile 3.3 nach innen gerichtete Bund 3.4 gegenüber der Wulst 3.6 in die Oberfläche des Rohrmaterials der Rohrenden 2 gepreßt. Durch das weitere axiale Schieben der Preßhülsen 5 gegen den doppelstufigen Bund 4 wird der am Ende der Haltebereiche 3.3 ebenfalls nach innen gerichtete Bund 3.5 in die Oberfläche des Rohrmaterials der Rohrenden 2 gepreßt. Gleichzeitig wird die kleine Stirnfläche der Preßhülsen 5 gegen die gegenüberliegend an der zweiten Stufe 4.2 des doppelstufigen Bundes 4 an die senkrechten Stirnflächen 4.2.1 gepreßt. Erst wenn alle Kupplungsteile sauber und exakt an- und aufeinander lagern kann das Preßwerkzeug gelöst und der Preßvorgang abgeschlossen werden.

### Aufstellung der verwendeten Bezugszeichen

- 1: Verbindungsstück,
- 2: Rohrenden,
- 3: Grundkörper,
- 3.1: mittlerer Bereich,
- 3.2: Anschlag,
- 3.3: Haltebereich,
- 3.4: Bund gegenüber der Wulst,
- 3.5: Bund am Ende des Haltebereiches,
- 3.6: Wulst,
- 4.: doppelstufiger Bund,
- 4.1: erster Stufenbereich,
- 4.1.1: sich radial verjüngende Stirnflächen,
- 4.2: zweiter Stufenbereich,
- 4.2.1: senkrechte Stirnflächen,
- 5.: Preßhülsen,
- 5.1: schanzenförmig ansteigende Kontur,
- 5.2: geschwungene Rampe,
- 5.3: geschwungene Rampe,
- 5.4: Ausnehmung,

## Patentansprüche

1. Kupplung zur Herstellung einer Preßverbindung zwischen zwei Rohren, bestehend aus einem Verbindungsstück (1) mit einem beide Rohrenden (2) umfassenden muffenförmigen, rotationssymetrischen Grundkörper (3), aufweisend einen mittleren Bereich (3.1), einen dem Rohrdurchmesser der Rohrenden (2) entsprechenden Anschlag (3.2), einen beiderseits des mittleren Bereichs (3.1) anschließenden Haltebereich (3.3) zur Aufnahme der Rohrenden (2), wobei die Innenwand des Grundkörpers (3) mit mindestens einem nach innen gerichteten ersten Bund (3.4) und endseitig mit einem nach innen gerichteten zweiten Bund (3.5) und die Außenwand der Haltebereiche (3.3) gegenüber dem ersten Bund (3.4) mit einer nach außen gekrümmtem Wulst (3.6) versehen ist wobei die anschließenden Haltebereiche (3.3) umgreifende, axial verschiebbare Preßhülsen (5) aufweisen,
**dadurch gekennzeichnet,**
**daß** am Grundkörper (3) des Verbindungsstücks (1) der mittlere Bereich (3.1) als radial nach außen gerichteter doppelstufiger Bund (4) ausgebildet ist, dessen erster Stufenbereich (4.1) sich radial verjüngende Stirnflächen (4.1.1) aufweist, an die sich ein zweiter Stufenbereich (4.2) mit einer beidseitig radial senkrecht verlaufenden Anschlagfläche (4.2.1) anschließt, wobei an die Anschlagflächen (4.2.1) jeweils einer der Haltebereiche (3.3) axial angeformt ist, dessen Außenfläche, in axialer Richtung nacheinander in einer abfallenden und einer ebenen Form verläuft und daß an den axial verschiebbaren Preßhülsen (5) an ihrer kreisförmigen Außenwand an ihrem zum doppelstufigen Bund (4) gerichteten Ende eine schanzenförmig ansteigende Kontur (5.1) und an ihrer kreisförmigen Innenwand in axialer Richtung zwei nacheinander abfallend geschwungene Rampen (5.2, 5.3) angeformt sind und an ihrem vom doppelstufigen Bund (4) abgewandten Ende in einer ringförmigen Stirnfläche eine axiale nach innen gerichtete Ausnehmung (5.4) angeordnet ist.

2. Kupplung zur Herstellung einer Preßverbindung zwischen zwei Rohren, nach Anspruch 1, **dadurch gekennzeichnet, daß** der doppelstufige Bund (4) aus dem radial nach außen gerichteten ersten Stufenbereich (4.1) mit den zwei gegenüberliegenden sich in radialer Richtung zur Achse verjüngenden Stirnflächen (4.1.1) und dem daran anschließenden zweiten axial breiteren Stufenbereich (4.2), der mit den zwei, sich gegenüberliegenden, in radialer Richtung senkrecht verlaufenden Anschlagflächen (4.2.1) ausgestattet ist, besteht.

3. Kupplung zur Herstellung einer Preßverbindung zwischen zwei Rohren, nach Anspruch 1, **dadurch gekennzeichnet, daß** die Außenfläche der Haltebereiche (3.3) jeweils, zwischen der senkrechten Anschlagfläche (4.2.1) und der Wulst (3.6) in axialer Richtung zunächst abfallend und danach eben verläuft, wobei die Wulst (3.6) abfallend zum übrigen rotationssymetrischen Grundkörper (3) ausgebildet und gegenüber dem jeweils nach innen gerichteten ersten Bund (3.4) an der Innenwand des Haltebereiches (3.3) angeformt ist.

4. Kupplung zur Herstellung einer Preßverbindung zwischen zwei Rohren, nach einem der vohergehenden Ansprüche, **dadurch gekennzeichnet, daß** die sich an den radial nach außen gerichteten ersten Stufenbereich (4.1) gegenüberliegend anschließenden in radialer Richtung verjüngenden Stirnflächen (4.1.1) und die am, vom doppelstufigen Bund (4) abgewandten Ende der Preßhülsen (5) in der ringförmigen Stirnfläche axial nach innen gerichteten Ausnehmung (5.4) Aufnahmen für ein Preßwerkzeug sind.

## Claims

1. Coupling for producing a compression connection between two pipes, consisting of a connection piece (1) with a collar-shaped rotationally symmetrical base body (3) incorporating the two pipe ends (2), the base body having a central region (3.1), a stop (3.2) corresponding to the pipe diameter of the pipe ends (2), a holding region (3.3) adjacent to both sides of the central region (3.1) for receiving the pipe ends (2), wherein the inner wall of the base body (3) is provided with at least one first flange (3.4) pointing inwards and, on its end face, with a second flange (3.5) pointing inwards, and the outer wall of the holding regions (3.3) is provided with a bead (3.6) curved outwards opposite the first flange (3.4), wherein the adjacent holding regions (3.3) have circumferentially engaging, axially movable pressing sleeves (5),
**characterised in that,**
on the base body (3) of the connection piece (1), the central region (3.1) is constructed as a double-stage flange (4) pointing radially outwards, the first stage region (4.1) of which has radially tapering end faces (4.1.1) to which a second stage region (4.2) with a stop surface (4.2.1) running radially perpendicular on both sides is adjacent, wherein on each of the stop surfaces (4.2.1), one of the holding regions (3.3) is axially integrally shaped, the outer surface of which runs in an axial direction successively in a sloping and level manner, and **in that**
on the axially movable pressing sleeves (5), a ski jump-shaped rising contour (5.1) is integrally shaped on the circular outer wall thereof on the end pointing towards the double-stage flange (4), and two curved ramps (5.2, 5.3) sloping successively in an axial direction are integrally shaped on the circular inner wall thereof, and a recess (5.4) pointing axially inwards is arranged on a ring-shaped end face on the end thereof remote from the double-stage flange (4).

2. Coupling for producing a compression connection between two pipes, according to claim 1, **characterised in that** the double-stage flange (4) consists of the first stage region (4.1) pointing radially outwards with the two opposing end faces (4.1.1) tapering radially towards the axis, and of the second axially wider stage region (4.2) adjacent thereto which is equipped with the two mutually opposing stop surfaces (4.2.1) running perpendicular in a radial direction.

3. Coupling for producing a compression connection between two pipes, according to claim 1, **characterised in that** the outer surface of the respective holding regions (3.3) initially runs in a sloping manner and then in a level manner between the perpendicular stop surface (4.2.1) and the bead (3.6), wherein the bead (3.6) is constructed tapering towards the remaining rotationally symmetrical base body (3) and is integrally shaped on the inner wall of the holding region (3.3) opposite the respective inwardly pointing first flange (3.4).

4. Coupling for producing a compression connection between two pipes, according to any of the preceding claims, **characterised in that** the opposing radially tapering end faces (4.1.1) adjacent to the first stage region (4.1) pointing radially outwards, and the recess (5.4) pointing radially inwards into the ring-shaped end face on the end of the pressing sleeves (5) remote from the double-stage flange (4) are receptacles for a press tool.

## Revendications

1. Accouplement destiné à réaliser une liaison par serrage entre deux tuyaux, se composant d'une pièce de jonction (1) ayant un corps de base (3) à symétrie de révolution en forme de manchon enveloppant les deux extrémités de tuyau (2), présentant une zone centrale (3.1), une butée (3.2) correspondant au diamètre de tuyau des extrémités de tuyau (2), une zone de maintien (3.3) qui suit de part et d'autre la zone centrale (3.1) et est destinée à recevoir les extrémités de tuyau (2), la paroi intérieure du corps de base (3) étant pourvue d'au moins un premier collet (3.4) dirigé vers l'intérieur et, à l'extrémité, d'un deuxième collet (3.5) dirigé vers l'intérieur, et la paroi extérieure des zones de maintien (3.3) étant pourvue, en regard du premier collet (3.4), d'un bourrelet (3.6) courbé vers l'extérieur, les zones de maintien (3.3) contiguës présentant des douilles de serrage (5) enveloppantes et axialement déplaçables,
**caractérisé par le fait que**, sur ledit corps de base (3) de la pièce de jonction (1), la zone centrale (3.1) est réalisée en tant que collet (4) à double gradin dirigé radialement vers l'extérieur dont la première zone de gradin (4.1) présente des surfaces frontales (4.1.1) qui se rétrécissent radialement et qui sont suivies d'une deuxième zone de gradin (4.2) ayant une surface de butée (4.2.1) s'étendant de manière radialement verticale de part et d'autre, sur les surfaces de butée (4.2.1) étant moulée axialement respectivement l'une des zones de maintien (3.3) dont la surface extérieure s'étend successivement, dans la direction axiale, en une forme descendante et en une forme plane, et
que, sur les douilles de serrage (5) axialement déplaçables, sur leur paroi extérieure circulaire, à leur extrémité dirigée vers le collet (4) à double gradin, est moulé un contour (5.1) montant en forme de tremplin et, sur leur paroi intérieure circulaire, sont moulées deux rampes (5.2, 5.3) incurvées descendant l'une après l'autre dans la direction axiale, et, à leur extrémité montrant dans la direction opposée au collet (4) à double gradin, dans une surface frontale annulaire, est disposé un évidement (5.4) montrant axialement vers l'intérieur.

2. Accouplement destiné à réaliser une liaison par serrage entre deux tuyaux, selon la revendication 1, **caractérisé par le fait que** le collet (4) à double gradin se compose de la première zone de gradin (4.1) dirigée radialement vers l'extérieur et ayant les deux surfaces frontales (4.1.1) opposées se rétrécissant dans la direction radiale vers l'axe ainsi que de la deuxième zone de gradin (4.2) y contiguë axialement plus large qui est munie des deux surfaces de butée (4.2.1) en regard l'une de l'autre s'étendant verticalement dans la direction radiale.

3. Accouplement destiné à réaliser une liaison par serrage entre deux tuyaux, selon la revendication 1, **caractérisé par le fait que** la surface extérieure des zones de maintien (3.3) s'étend respectivement, entre la surface de butée (4.2.1) verticale et ledit bourrelet (3.6), dans la direction axiale, d'abord de manière descendante et ensuite de manière plane, le bourrelet (3.6) étant réalisé de manière descendante par rapport au reste du corps de base (3) à symétrie de révolution et étant moulé en regard du premier collet (3.4) dirigé respectivement vers l'intérieur, sur la paroi intérieure de la zone de maintien (3.3).

4. Accouplement destiné à réaliser une liaison par serrage entre deux tuyaux, selon l'une quelconque des revendications précédentes, **caractérisé par le fait que** les surfaces frontales (4.1.1) qui suivent en regard ladite première zone de gradin (4.1) dirigée radialement vers l'extérieur et qui se rétrécissent dans la direction radiale ainsi que ledit évidement (5.4) dirigé axialement vers l'intérieur qui est situé à l'extrémité des douilles de serrage (5) montrant dans la direction opposée au collet (4) à double gradin, dans la surface frontale annulaire, sont des logements pour un outil de serrage.
